# EUROPEAN PATENT APPLICATION

(11) **EP 2 822 329 A1**
(43) Date of publication of application: **07.01.2015**
(21) Application number: 14183621.3
(22) Date of filing: 02.11.2004
(51) Int. Cl.: H04W 48/12

(54) **Method and system of wireless communications**

(62) Divisional of application: 04800255.4
(71) Applicant: Unwired Planet International Limited, Dublin 2 (IE)
(72) Inventor: Olsson, Andreas, S-118 59 Stockholm (SE); Sundberg, Krister, S-191 43 Sollentuna (SE)
(74) Representative: EIP

(57) **Abstract**

The present invention relates to wireless communications. More especially it relates to wireless packet data communications. Particularly it relates to latency reduction when scheduling a plurality of temporarily inactive users or TBFs for a communications resource. Users or TBFs are pooled at controlled collision rate.

## Description

### TECHNICAL FIELD OF THE INVENTION

The present invention relates to wireless communications. More especially it relates to wireless packet data communications. Particularly it relates to latency reduction when scheduling a plurality of users for a communications resource.

### BACKGROUND AND DESCRIPTION OF RELATED ART

Multiplexing of a plurality of users on a common resource is well known in prior art. FDM (Frequency Division Multiplex), TDM (Time Division Multiplex) and CDM (Code Division Multiplex) are well known examples of multiplexing principles.

Also a number of queuing disciplines are known for scheduling traffic on the multiplexed resource.

Antonio Capone, Mario Gerla and Rohi Kapoor, 'Efficient Polling Schemes for Bluetooth picocells,' IEEE International Conference on Communications, Helsinki, Finland, June 2001, describes single server polling systems. They compare an exhaustive benchmark polling scheme and three practical schemes: Pure Round Robin, Exhaustive Round Robin and Exhaustive Pseudo-cyclic. An extension of Exhaustive Round Robin scheme called Limited and Weighted Round Robin limits the number of transmissions per cycle reducing the capture effect and weights the queues according to observed queue status is argued to provide performance close to Exhaustive Round Robin.

Yeng Zhong Lee, Rohit Kapoor and Mario Gerla, 'An Efficient and Fair Polling Scheme for Bluetooth,' MILCOM 2002 - IEEE Military Communications Conference, vol. 21, no. 1, October 2002, presents a Pseudo-Random Cyclic Limited slot-Weighted Round Robin scheme using a pseudo-random ordering of slaves in a cycle. It is claimed in the publication that a polling scheme that does not employ a pseudo-random ordering can easily lead to unfairness among TCP connections.

Hossam Fattah, Cyril Leung, 'An Overview of Scheduling Algorithms in Wireless Multimedia Networks,' IEEE Wireless Communications, pp. 76-83, June 2002 describes a plurality of scheduling algorithms and among other things scheduling in CDMA networks. One algorithm, Scheduled CDMA, reveals data exchange between BS and MS in fixed-size unit called capsule, comprising one or more packets. For uplink scheduling a capsule transmission request is sent to base station by mobile station whenever the MS has new packets to transmit. For each time slot the scheduler selects capsule transmission requests from a common queue ordered according to priority or delay sensitivity. The base station sends transmission permission capsules to selected mobile stations to inform them of their capsule transmission times and power levels.

3rd Generation Partnership Project (3GPP): Technical Specification Group GSM/EDGE Radio Access Network, General Packet Radio Service (GPRS), Mobile Station (MS) - Base Station System (BSS) interface, Radio Link Control/Medium Access Control (RLC/MAC) protocol (Release 5), 3GPP TS 44.060 v5.13.0, France, September 2004*,* specifies procedures for Radio Link Control, RLC, layer and Medium Access Control, MAC, layer, including physical link control functions of the radio interface between GSM/EDGE Radio Access Network, GERAN, and Mobile Station, MS. An Uplink State Flag, USF, is used on Packet Data Channel (s), PDCH(es) to allow multiplexing of uplink radio blocks from different mobile stations. An RR (Radio Resource) connection is a physical connection established between a mobile station and the network to support exchange of information flows. A TBF (Temporary Block Flow) is, in A/Gb mode, a physical connection used by the two RR peer entities to support the unidirectional transfer of LLC (Logical Link Control) PDUs on packet data physical channels. (A/Gb mode is a mode of operation of the MS when connected to the Core Network, CN, via GERAN and the A and/or Gb interfaces; the A interface being the interface between a BSS (Base Station Subsystem) and a 2G MSC (Mobile Switching Center) and the Gb interface being the interface between a BSS and a 2G SGSN (Serving GPRS Support Node).) In Iu mode, a TBF is a logical connection offered by two MAC entities to support the unidirectional transfer of RLC PDUs on basic physical subchannels. (Iu mode is a mode of operation of the MS when connected to the CN via GERAN or UTRAN and the Iu interface; the Iu interface being the interface between a BSS or an RNC (Radio Network Controller) and a 3G MSC or a 3G SGSN.) In extended uplink TBF mode, the uplink TBF may be maintained during temporary inactive periods, where the mobile station has no RLC information to send.

The mobile station generally operates with a sliding transmission window of RLC data PDUs. In the extended uplink TBF mode of Technical Specification 3GPP TS 44.060, if there is no RLC data block available within the window, the mobile station shall stop sending RLC data blocks. The mobile station shall continue sending RLC data blocks when an RLC data block becomes available in the window.

3rd Generation Partnership Project (3GPP): Technical Specification Group GSM/EDGE Radio Access Network, Multiplexing and multiple access on the radio path (Release 5), 3GPP TS 45.002 v5.12.0, France, April 2004*,* defines the physical channels of the radio sub system required to support the logical channels. It includes a description of the logical channels and the definition of frequency hopping, TDMA (Time Division Multiple Access) frames, timeslots and bursts. In the uplink part for channels other than PACCH (Packet Associated Control Channel) transmitted as access bursts on PRACH (Packet Random Access Channel) or CPRACH (Compact Packet Random Access Channel), the logical channel type shall be indicated by the message type contained in the block header part. For PACCH transmitted as access bursts, the logical channel type is indicated by the corresponding polling message on the downlink. For the PRACH or CPRACH case the logical channel type is indicated by the USF, set on the downlink on a block-by-block basis.

The MAC layer is responsible for sharing of communications resource (the air interface) common to data and voice users, according to an allocation strategy.

In e.g. GSM/GPRS, MAC of BSS (Base Station Subsystem) is responsible for management of uplink and downlink scheduling of RLC blocks belonging to different TBFs over available time slots, resolving conflicts due to e.g. request collisions, assigning uplink TBFs to requesting MTs (Mobile Terminals) if there are time-slots available, notifying of uplink TBF deallocation if MT has been inactive during a predefined period, associating respective voice calls to a pair of time-slots and signaling as need be for deallocating of a TBF to render the time-slot pair available for speech communications. In uplink direction, MAC of MT is responsible for initiating transmission of requests of uplink TBFs to BSS for transfer of data for which no TBF is yet established. Once the TBF setup is acknowledged, MAC of MT forwards RLC PDUs, carrying one or more segmented LLC PDUs, over a time-slot allocated by BSS. MT continues sending until there is no more data to send, or it has transmitted a maximum number of RLC blocks allowed. The TBF is then released. Each TBF is assigned by the network a temporary flow identity, TFI, which is unique in both directions.

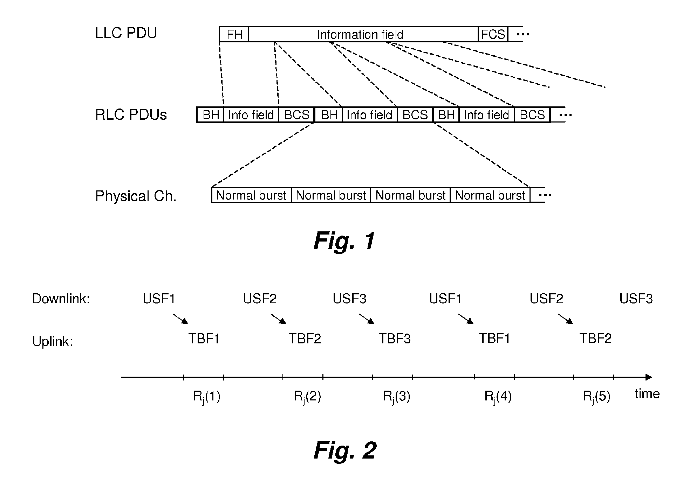

Figure 1 illustrates schematically segmentation/reassembly of LLC PDUs and RLC PDUs. The LLC PDU comprises a frame header «FH», LLC data or control information «Information field», and a frame check sequence «FCS». A radio block consists of a 1-byte MAC header «BH» followed by RLC data «Info field», or an RLC/MAC control block «Info field», finalized by a 16-bit block check sequence, «BCS». The radio block is carried on the physical channel by four normal bursts.

None of the cited documents above discloses uplink group scheduling of data transmissions or sending out of a particular RLC/MAC message or a particular bit in a poll message to each mobile station, MS, in order to trigger or stop uplink group scheduled TBFs, the trigger giving all of them access to the physical resource of a possibly multiplexed resource.

### SUMMARY OF THE INVENTION

A general problem of multiple access systems is to fulfill various requirements of a session as regards, e.g. QoS. Another problem is how to incorporate such requirements when allocating traffic to communications resources and scheduling of transmission instances.

In multi-user access, delay sensitive applications are observed to often also be bursty in nature. Individual scheduling of TBFs then risks being inefficient in terms of underutilized resources and increased latency as perceived by an end user.

Generally, this is less of a problem in downlink direction, where a base station transmits data to a plurality of users and resources efficiently can be allocated and scheduled in relation to information available at sender side.

In uplink direction a base station receiving information from a plurality of user devices, the queue status of the mobile entity is not always available, at least not if limited time restrictions also need to be met. Further it may not be efficient to spend communication resources on communicating such information to a scheduling entity, such as a base station or base station controller.

Consequently, there is a need of providing efficient uplink scheduling of packet data transmissions for temporarily inactive users multiplexed on the same communication resources.

Another object of the invention to keep the risk of collisions of data packets of different users below a selected level.

Finally, it is an object to provide control messages that fulfills the above-mentioned objects.

These objects are met by a method and system of uplink scheduling and associated signaling.

### BRIEF DESCRIPTION OF THE DRAWINGS

Figure 1 illustrates schematically segmentation/reassembly of LLC PDUs and RLC PDUs according to prior art.
Figure 2 illustrates an example of equal share splitting of a resource.
Figure 3 illustrates schematically example delay and waste of capacity with individual scheduling according to prior art.
Figure 4 illustrates uplink scheduling according to the invention grouping or pooling of a plurality of inactive TBFs.
Figure 5 illustrates an information field element of a trigger message according to the first variation of a first basic embodiment of the invention and of a stop message according to a second basic embodiment of the invention.
Figure 6 illustrates information field elements of a trigger message according to a first mode of a first embodiment of the invention.
Figure 7 illustrates information elements of a trigger message according to a second mode of the first embodiment of the invention.

### DESCRIPTION OF PREFERRED EMBODIMENTS

For delay sensitive applications it is important with low latency.

The invention identifies that scheduling of a number of temporarily inactive TBFs (temporarily carrying no data) allowing occurrence of collisions when transmitting on a communications resource, such as a PDCH, would reduce latency as compared to splitting the resource in time dedicating the fractions to particular TBFs.

An example of equal share splitting of a resource is schematically illustrated in figure 2. In the example there are three TBFs «TBF1», «TBF2», «TBF3» of uplink scheduling for a communications resource Rⱼ(t) at various time instances t «Rⱼ(1)», «Rⱼ(2)», «Rⱼ(3)», «Rⱼ(4)», «Rⱼ(5)». The communications resource can be, e.g., one or more recurring time slots of a time multiplexed system, which is anticipated in the figure. Each TBF is preceded by a corresponding USF «USF1», «USF2», «USF3».

If the respective data sources of the TBFs «TBF1», «TBF2», «TBF3» are bursty in nature, the dynamic individual scheduling imposes a great risk that one or more of the time-shares allotted to one or more TBFs are temporarily unused.

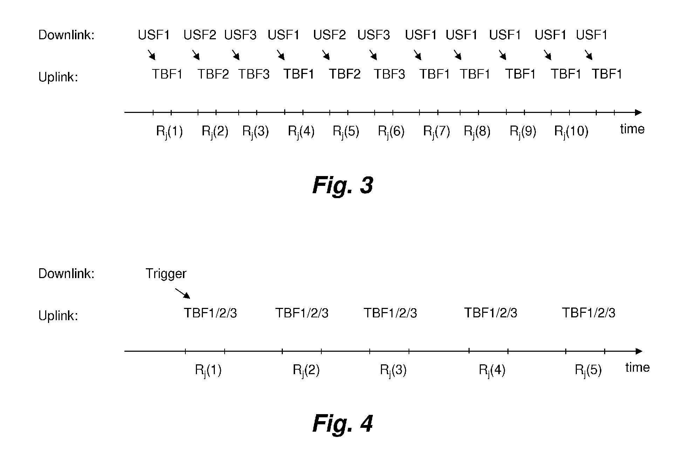

If e.g. a first TBF «TBF1» has a substantial amount of data queuing up in sending entity, e.g. mobile station, there is a waste of capacity and resources to schedule transmissions for a second «TBF2» and third TBF «TBF3» having the first «TBF1» to wait from time instance two, which would have been the next, until, e.g., time instance four for its next transmission if there is no data to transmit for TBFs two and three «TBF2», «TBF3». Further, if there is no data to transmit for TBFs two and three «TBF2», «TBF3», TBF one «TBF1» should be scheduled for a greater share of the transmission resource, but with individual scheduling of prior art this is not detected at BSS and communicated to the mobile station such that it can transmit data more intensively until a propagation round-trip time has lapsed. This is illustrated schematically in figure 3. The first TBF «TBF1» does not start transmitting intensively until time instance 7, when it starts transmitting on scheduled resources «Rⱼ(7)», «Rⱼ(8)», «Rⱼ(9)», «Rⱼ(10)» at time instances 7-11 or more time instances (depending on traffic situation). An example study for GSM/GPRS reveals that for four simultaneous TBFs (users) in a cell, this kind of problems contributes to an estimated excessive delay corresponding to approximately 80 ms on average. Also greater delays could arise depending on e.g. data packet sizes and number of users.

Figure 4 illustrates uplink scheduling according to the invention remedying both aforementioned deficiencies by grouping or pooling of a plurality of inactive TBFs. The pooling is triggered by e.g. sending of a particular trigger message «Trigger» concerning the plurality of selected TBFs rendering the communications resource accessible to the selected TBFs, letting the various TBFs «TBF1/2/3» compete for the resource «Rⱼ(1)», «Rⱼ(2)», «Rⱼ(3)», «Rⱼ(4)», «Rⱼ(5)». By proper selection of the TBFs allowed to compete within a pool, the risk of collision is kept at a minimum due to the bursty nature of packet data traffic. Traffic characteristics affect the collision rate and consequently the number of TBFs to be selected or pooled.

Collisions are preferably handled as follows. When collisions of grouped TBFs occur and the received PDU is not considered valid according to a checksum, the very scheduling is considered empty or otherwise treated in correspondence to data transmissions corrupted by noise or interference. If there have been no correctly (according to checksums) received transmissions during a predefined period from any user or TBF of the pooled group of TBFs, the TBFs are scheduled individually and are individually checked for data.

There are two basic embodiments, primarily discriminating by how a particular pooling period is ended, of the invention presented in further detail below:
1. by setting of a stopper (e.g. a time-out or maximum number of consecutive PDUs or data packets), and
2. by sending of an explicit stop message.

Preferably, inactive users or TBFs are those considered for grouped or pooled scheduling. Users or TBFs active to a greater extent than set by the stopper are preferably not grouped or pooled but scheduled individually. Thereby the risk of collisions is reduced further. For the first basic embodiment, when an inactive user or TBF becomes active to a greater extent than set by the stopper, or is identified as such, it is preferably excluded from grouped scheduling.

As mentioned above, the group scheduling of TBF pooling is triggered by an appropriate message of control signaling. In GSM/GPRS the message triggering the group scheduling is preferably a particular trigger message of RLC/MAC protocol, or a new bit in a poll message.

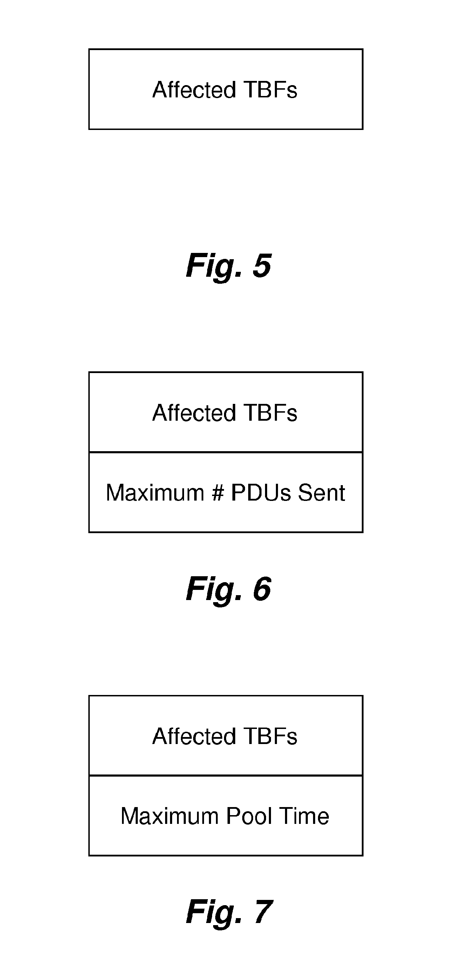

According to the first basic embodiment of the invention, a pooling period is set on beforehand by e.g. a BSS. The period is preferably included in the message triggering pooling (first variation of first basic embodiment), or is sent as System Information on a broadcast channel of a cell or base station (second variation of first basic embodiment). Figure 5 illustrates an information field element of a trigger message according to the first variation of the first basic embodiment. The information field comprises affected TBF or TBFs «Affected TBFs». In a first mode of the first variation of the first basic embodiment, the period as seen by an individual TBF is determined by a maximum number of RLC data blocks allowed to send. Figure 6 illustrates information field elements of a trigger message according to the first mode of the first variation of the first basic embodiment. A field of affected TBF or TBFs «Affected TBFs» indicate to which TBFs the message is relevant and a field of maximum number of PDUs to send «Maximum # PDUs Sent» indicates to a TBF when pooling is ended. In a second mode of the first variation of the first embodi ment, for which information fields of a trigger message is illustrated in figure 7, the period as seen by all TBFs in the pool is limited by a maximum time of the pooling period «Maximum Pool Time». Also in the trigger message according to the second mode of the first embodiment there is an information field of affected TBF or TBFs «Affected TBFs» identical to the corresponding information field of figure 6.

According to the second basic embodiment of the invention a pooling period is ended by a particular stop message to affected TBFs. For GSM/GPRS, the stop message is preferably a particular stop message of RLC/MAC protocol. The stop message comprises an information field with information on affected TBF or TBFs «Affected TBF» as schematically illustrated in figure 5.

The embodiments can be combined. Thereby, e.g., a pooling period initially set can be stopped prior to the period initially set having lapsed.

The invention applies to particularly radio communication systems but also to other wireless communications, e.g. infrared communications, whenever they involve uplink scheduling of a plurality of packet data connections.

In this patent application acronyms such as BSS, MT, MS, GSM or GPRS are applied. However, the invention is not limited to systems with entities with these acronyms, but holds for all communications systems operating analogously.

The invention is not intended to be limited only to the embodiments described in detail above. Changes and modifications may be made without departing from the invention. It covers all modifications within the scope of the following claims.

The following numbered clauses on pages 13 to 15 of the present description correspond to the claims of European patent application no. 04800255.4, from which the present application is divided, as filed. The claims of the present application as filed can be found on the subsequent pages 16 and 17 of the specification which begin with the heading "CLAIMS".
1. A method of wireless uplink packet data communications **characterized in** that packet data communications of different connections or TBFs are scheduled in one or more groups of connections or TBFs, the connections or TBFs of a group being scheduled for data transmissions allowing the connections or TBFs to transmit simultaneously on a same wireless channel resource.
2. The method of wireless uplink packet data communications according to claim 1 **characterized in** that connections or TBFs are grouped during a time period of finite duration.
3. The method of wireless uplink packet data communications according to claim 2 **characterized in** that the time period of finite duration is initiated by a trigger message.
4. The method of wireless uplink packet data communications according to claim 3 **characterized in** that the trigger message is a particular RLC/MAC message or a particular bit or flag in a poll message
5. The method of wireless uplink packet data communications according to claim 2 **characterized in** that the time period of finite duration is sent on a broadcast channel in terms of a maximum number of consecutive data blocks a connection or TBF of the group is allowed to send.
6. The method of wireless uplink packet data communications according to claim 2 **characterized in** that the time period of finite duration is sent on a broadcast channel in terms of an explicit time period or stop time.
7. The method of wireless uplink packet data communications according to claim 2 **characterized in** that the time period of finite duration is sent as system information on a broadcast channel.
8. The method of wireless uplink packet data communications according to claim 3 **characterized in** that the time period of finite duration is included in the trigger message in terms of a maximum number of consecutive data blocks a connection or TBF of the group is allowed to send.
9. The method of wireless uplink packet data communications according to claim 3 **characterized in** that the time period of finite duration is included in the trigger message in terms of an explicit time period or stop time.
10. The method of wireless uplink packet data communications according to claim 2 **characterized in** that the time period of finite duration is ended by a stop message.
11. The method of wireless uplink packet data communications according to any of claims 3-9 **characterized in** that the trigger message includes an information element comprising identity of affected one or more connections or TBFs.
12. The method of wireless uplink packet data communications according to claim 10 **characterized in** that the stop message includes an information element comprising identity of affected one or more connections or TBFs.
13. A communications element for use in a wireless communications system **characterized by** processing means for carrying out the method in any of claims 1-12.
14. The communications element according to claim 13 **characterized in** that the communications element is included in or is a mobile station of a mobile communications system.
15. The communications element according to claim 13 **characterized in** that the communications element is included in or is a base station subsystem of a mobile communications system.
16. A communications system **characterized by** the communications system comprising processing means for carrying out the method in any of claims 1-12.

## Claims

**1.** A method of scheduling wireless uplink data communications, **characterized in that** data communications of a plurality of temporarily inactive connections are scheduled in a group of connections, the connections of the group being scheduled for data transmissions allowing the connections to transmit on a same wireless channel resource.

**2.** A method according to claim 1, **characterized in that** the connections are grouped during a time period of finite duration.

**3.** A method according to claim 2, **characterized in that** the time period of finite duration is initiated by a trigger message.4. A method according to claims 3, **characterized in that** the trigger message includes an information element identifying the connections.

**5.** A method according to claims 2-4, **characterized in that** the time period of finite duration is ended by a stop message.

**6.** A method according to claim 5, **characterized in that** the stop message includes an information element identifying the connections.

**7.** A method according to any of claims 1-6, comprising excluding a connection from group scheduling when the connection becomes active to a greater extent than set by a stopper.

**8.** A method according to claim 7, wherein the stopper is set to indicate a maximum number of consecutive PDUs or data packets.

**9.** A method according to any of claims 1-8, wherein the plurality of connections comprise a plurality of temporary block flows, TBFs.

**10.** A method according to any of claims 1-9, comprising sending a trigger message to make the wireless channel resource available to the connections of the group.

**11.** A method according to any of claims 1-10, comprising scheduling the connections of the group individually if there have been no correctly received transmissions from any connection of the group during a predefined period.

**12.** A method according to any of claims 1-11, wherein the wireless communications comprise wireless packet data communications.

**13.** A method according to any of claims 1-12, wherein the wireless channel resource comprises one or more recurring time slots of a time multiplexed system.

**14.** A communications element for use in a wireless communications system **characterized by** processing means for carrying out the method in any of claims 1-13.

**15.** A communications element according to claim 14 **characterized in that** the communications element is included in or is a base station subsystem of a mobile communications system.
